**Europäisches Patentamt**

**European Patent Office**

**Office européen des brevets**

(19)

(11) Veröffentlichungsnummer: **0 370 369 B1**

# (12) EUROPÄISCHE PATENTSCHRIFT

(45) Veröffentlichungstag der Patentschrift:
12.06.91 Patentblatt 91/24

(51) Int. Cl.$^5$: **A01J 25/08, B65G 53/30**

(21) Anmeldenummer: **89121083.3**

(22) Anmeldetag: **14.11.89**

(54) **Käsebruch-Förderanlage.**

(30) Priorität: **22.11.88 DE 3839408**

(43) Veröffentlichungstag der Anmeldung:
**30.05.90 Patentblatt 90/22**

(45) Bekanntmachung des Hinweises auf die
Patenterteilung:
**12.06.91 Patentblatt 91/24**

(84) Benannte Vertragsstaaten:
**ES FR IT**

(56) Entgegenhaltungen:
**DE-A- 1 582 987**
**DE-A- 3 144 067**
**NL-A- 266 814**

(73) Patentinhaber: **HERMANN WALDNER GMBH
& CO.
Postfach 98
W-7988 Wangen/Allgaü (DE)**

(72) Erfinder: **Dietz, Herbert, Dipl.-Ing. (FH)
Alpenstrasse 14
W-7989 Amtzell (DE)**

(74) Vertreter: **Schieschke, Klaus, Dipl.-Ing. et al
Patentanwälte Dipl.-Ing. E. Eder Dipl.-Ing. K.
Schieschke Elisabethstrasse 34
W-8000 München 40 (DE)**

## Beschreibung

Die Erfindung bezieht sich auf eine Käsebruch-Förderanlage, mit einer zwischen einer Bearbeitungsstation und einer Portionierstation angeordneten Bruchpumpe, wobei die Bruchpumpe als Doppelpumpenbehälter ausgebildet ist, mit zwei den Käsebruch aufnehmenden Behältern, welche jeweils über eine erste Leitung mit einer gemeinsamen Produkteinlaufhauptleitung und jeweils über eine zweite Leitung mit einer gemeinsamen Produktauslaufhauptleitung verbunden sind, wobei jeder der Behälter eine Reinigungskugel aufweist und beide Reinigungskugeln über Zuluftleitungen und eine gemeinsame Zulufthauptleitung mit einer Zuluftquelle in Verbindung stehen und in das Innere jedes Behälters eine mit einer gemeinsamen Abilufthauptleitung verbundene Abluftleitung führt und eine Reinigungshauptleitung über eine Nebenleitung mit den Abluftleitungen und eine weitere Nebenleitung mit den Zuluftleitungen verbunden sind und die einzelnen Leitungen über Ventile geöffnet und geschlossen werden können.

Als allgemein bekannter Stand der Technik existiert bereits eine derartige Käsebruch-Förderanlage, welche insbesondere dem schonenden Transport des Bruch-Molkegemischs von den Bearbeitungswannen zum Portionierautomat bzw. zur Abfüllstation dienen. Hierbei läuft über ein entsprechendes Gefälle das Bruch-Molkegemisch in die Bruchförderanlage. Der Weitertransport erfolgt durch Beaufschlagung der Druckbehälter mittels Druckluft.

Beim Programm "Bruchförderung" werden die beiden Druckbehälter der Bruchpumpe abwechslungsweise gefüllt und entleert.

Bei Programm "Reinigen" wird die Bruchförderanlage einmal im Normalbetrieb gereinigt, d.h. anstelle des Bruch-Molkegemischs wird eine Reinigungsflüssigkeit durch die Förderanlage gefahren.

Anschließend wird über obenliegende Reinigungskugeln Reinigungsflüssigkeit in die Behälter der Bruchpumpe gedrückt; im Wechsel wird die Reinigungsflüssigkeit auch über die Zu- und Abluftventile geleitet.

Der vorliegenden Erfindung liegt die Aufgabe zugrunde, diese bekannte Bruchpumpe einer Käsebruch-Förderanlage so zu verbessern, daß die Pumpbehälter als System komplett im einem Durchgang durch ein sogenanntes CIP-Programm zu reinigen ist, d.h. es soll eine sogenannte kontinuierliche Reinigung (cleaning-in-place) durchführbar sein.

Diese Aufgabe wird erfindungsgemäß dadurch gelöst, daß die Produkteinlaufhauptleitung gleichzeitig als Reinigungshauptleitung ausgebildet und über die über ein Ventil verschließbare Nebenleitung mit der Abilufthauptleitung verbunden ist, daß sich die Abilufthauptleitung gabelt in die Nebenleitung, welche mit den zu den Reinigungskugeln führenden Leitungen verbunden ist und in eine Nebenleitung, welche zu den mit jeweils einer weiteren Reinigungskugel in den Behältern verbundene Abluftleitungen führt und daß die beiden, mit der gemeinsamen Produktauslaufhauptleitung verbundenen Leitungen jeweils über eine Nebenleitung und eine gemeinsame Leitung mit der gemeinsamen Produktauslaufhauptleitung in Verbindung stehen, wobei in den Nebenleitungen Ventile und in der gemeinsamen Leitung ein Ventil und eine Kreiselpumpe angeordnet sind.

Hierdurch ergibt sich der Vorteil, daß auf einfache Weise ein Verrohrungsschema für die beiden Pumpenbehälter geschaffen wird, welches sowohl eine Bruchförderung, als auch eine CIP-Reinigung der Bruchleitung und der Behälter gewährleistet.

Die Behälter sind damit als System komplett zu reinigen durch ein CIP-Programm. Die Pumpbehälter sind vorteilhafterweise mit einer frei programmierbaren elektronischen Steuerung ausgerüstet, welche den spezifischen Bedürfnissen gerecht wird. Vorgesehen ist hierbei ein Programm für die Bruchförderung und ein Programm für die verschiedenen Reinigungszyklen. Darüber hinaus ist die erfindungsgemäße Bruchförderanlage mit einer Einrichtung ausgestattet, welche eine Fernregulierung der Förderleistung ermöglicht. Damit entfällt vorteilhafterweise das bisher umständliche Einstellen und Verändern der gewünschten Fördermenge, wodurch sich eine Vereinfachung ergibt.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:

Fig. 1 eine perspektivische Teilansicht einer Käsebruch-Förderanlage;

Fig. 2 ein Verrohrungsschema der Bruchpumpe in schematischer Ansicht;

Fig. 3 das Schema nach Fig. 2 bei Bruchförderung;

Fig. 4 das Schema nach Fig. 2 bei CIP-Reinigung der Bruchleitung;

Fig. 5 das Schema nach Fig. 2 bei CIP-Reinigung der Behälter;

Fig. 6 eine weitere Ausführungsform der Erfindung in schematischer Draufsicht.

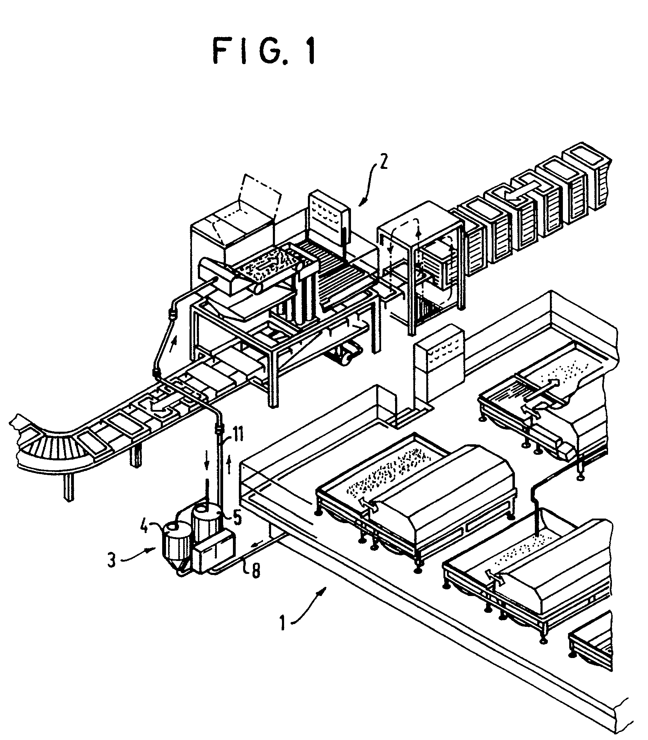

Figur 1 stellt perspektivisch einen Teil einer Käsebruch-Förderanlage dar, mit einer Bearbeitungsstation 1 mit nicht näher bezeichneten Wannen und einer Portionierstation 2. Zwischen der Bearbeitungsstation 1 und der Portionierstation 2 befindet sich eine Bruchpumpe 3, wobei diese Bruchpumpe 3 als Doppelpumpenbehälter ausgebildet ist, mit zwei, den Käsebruch aufnehmenden behältern 4 und 5. Über eine Produkthaupteinlaufleitung 8 erfolgt die Beschickung der Bruchpumpe 3; über eine Produkthauptauslaufleitung 11 wird das Produkt zu der Portionierstation 2 befördert.

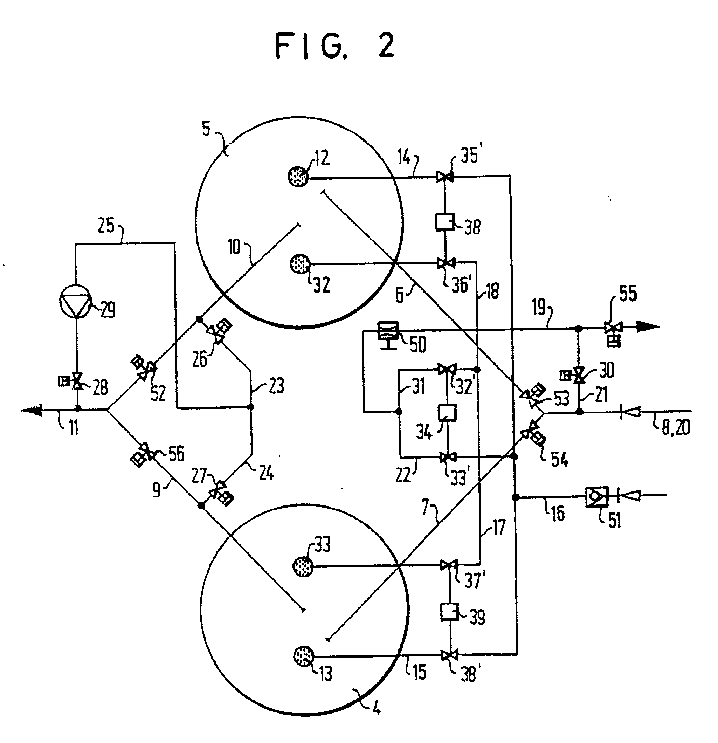

In Figur 2 ist die Konstruktion und das Verrohrungsschema der beiden Behälter 4 und 5 der Bruchpumpe 3 näher dargestellt. Wie ersichtlich, gabelt sich die Produkthaupteinlaufleitung 8 in die beiden Leitungen 6 und 7, in deren Bereich Ventile 53 und 54 angeordnet sind. Diese beiden Leitungen 6 und 7 führen in die Behälter 4 bzw. 5.

Die Produkthauptauslaufleitung 11 ihrerseits gabelt sich in die beiden Leitungen 9 und 10, in deren Leitungsschema ebenfalls zwei Ventile 52 und 56 angeordnet sind.

Erfindungsgemäß befinden sich im Bereich der beiden Leitungen 9 und 10 auf der Auslaufseite der beiden Behälter 4 und 5 zusätzliche Leitungen 23 und 24, welche über Ventile 26 und 27 abschließbar sind. Diese beiden Leitungen 23 und 24 münden in eine gemeinsame Leitung 25, die zu der Produkthauptauslaufleitung 11 führt. Im Leitungsschema der gemeinsamen Leitung 25 befindet sich ein Ventil 28 sowie eine Kreiselpumpe 29.

Innerhalb jedes der Behälter 4 bzw. 5 befinden sich zwei an sich bekannte Reinigungskugeln 12 und 32 bzw. 13 und 33. Hierbei sind die Reinigungskugeln 12 und 13 über Leitungen 14 und 15 mit einer gemeinsamen Zulufthauptleitung 16 verbunden, welche über ein Rückschlagventil 51 mit einer nicht näher dargestellten Zuluftdruckquelle verbunden ist. Im Bereich der Leitungen 14 und 15 befinden sich Kugelhähne 35' und 38'.

Die Reinigungskugeln 32 und 33 der Behälter 4 und 5 sind ihrerseits über Leitungen 17 und 18 sowie eine Leitung 31 und ein Drosselventil 50 mit einer gemeinsamen Abluthauptleitung 19 verbunden, in deren Schema ein Ventil 55 angeordnet ist. Weiter hin steht die Abluthauptleitung 19 ihrerseits über eine Nebenleitung 22 mit den Leitungen 14 und 15 der Reinigungskugeln 12 und 13 in Verbindung. Innerhalb der Leitungen 31 und 22 befinden sich Kugelhähne 32' und 33'. Diese beiden Kugelhähne 32' und 33' sind von einer gemeinsamen Betätigungsvorrichtung 34 betätigbar.

In gleicher Weise sind die Kugelhähne 35' und 36' über eine gemeinsame Betätigungsvorrichtung 38 und die Kugelhähne 37' und 38' über eine gemeinsame Betätigungsvorrichtung 39 betätigbar.

Wie ersichtlich, ist die Abluthauptleitung 19 mit der Produktzufuhrhauptleitung 8 über eine Nebenleitung 21 verbunden, innerhalb welcher ein Ventil 30 angeordnet ist. Die Produkteinlaufhauptleitung 8 ist gleichzeitig als Reinigungshauptleitung 20 ausgebildet.

Durch dieses, in Fig. 2 dargestellte Verrohrungsschema ergibt sich die Möglichkeit einer kontinuierlichen Reinigung der jeweiligen Rohrleitungen und der Behälter sowie der Reinigungskugeln im sogenannten CIP-Verfahren, ohne daß die Produktion unterbrochen werden muß.

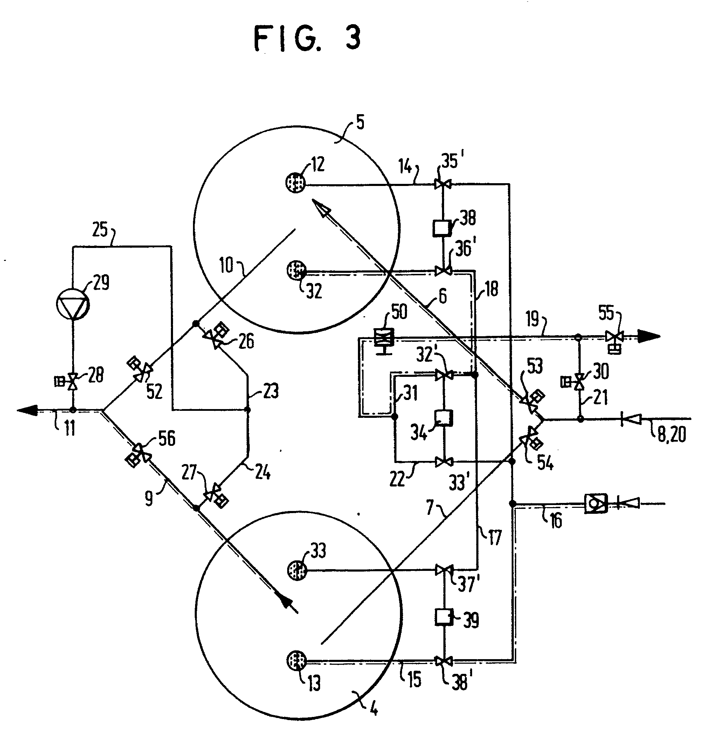

Figur 3 stellt schematisch die Bruchförderung dar. Wie ersichtlich, wird über die Zulufthauptleitung 16 Zuluft bei geöffnetem Kugelhahn 38' in die Nebenleitung 15 geführt, wodurch diese Zuluft über die Reinigungskugel 13 in den Behälter 4 eintritt. Gleichzeitig wird der Käsebruch über die Leitung 9 in die Produkthauptauslaufleitung 11 befördert und von dort weiter in die in Fig. 1 schematisch dargestellte Portionieranlage 2.

Parallel zu diesem Vorgang erfolgt die Befüllung des Behälters 5 über die Produkthaupteinlaufleitung 8 und die Nebenleitung 6 bei geöffnetem Ventil 53, während das Ventil 54 geschlossen ist. Die in dem Behälter 5 vorhandene Abluft wird über die Reinigungskugel 32 bei geöffnetem Kugelhahn 36' sowie über die Leitungen 18 und 31 bei ebenfalls geöffnetem Kugelhahn 32' sowie die Drossel 50 zur Abluthauptleitung 19 befördert, wobei das Ventil 55 geöffnet ist.

Der Weg der Abluft über die einzelnen vorgenannten Leitungen ist strichpunktiert dargestellt, während die Befüllung des Behälters 5 über die Leitungen 8 und 20 gestrichelt ausgeführt wurde. Damit ist es möglich, gleichzeitig den einen Behälter 5 zu füllen und den anderen Behälter 4 zu entleeren, wobei durch entsprechende Umschaltung der Ventile sinngemäß der Behälter 4 mit Käsebruch gefüllt und der Behälter 5 entleert werden kann.

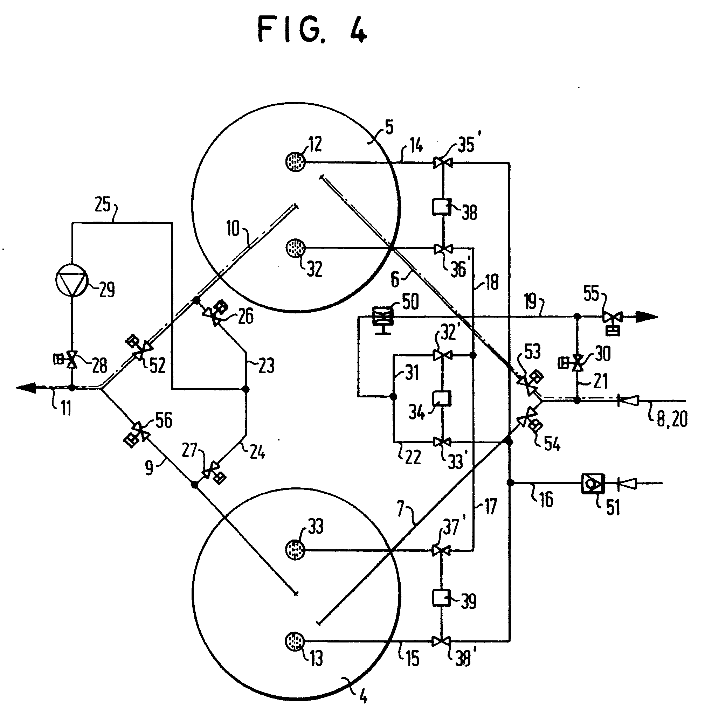

Gemäß Fig. 4 besteht nun die Möglichkeit der CIP-Reinigung der jeweiligen Bruchleitung : hierbei strömt Reinigungsmedium, wie strichpunktiert dargestellt, über die Reinigungshauptleitung 20, welche, wie vorstehend ausgeführt, gleichzeitig die Produkteinlaufhauptleitung 8 ist, sowie über die Nebenleitung 6 und die Reinigungskugel 12 in den Behälter 5, wodurch eine Reinigung der Leitungen 8 und 20 sowie des Behälters 5 ermöglicht wird. Dieses Reinigungsmedium strömt aus dem Behälter 5 über die Leitung 10 bei geöffnetem Ventil 52 in die Produkthauptauslaufleitung 11, wie ebenfalls strichpunktiert dargestellt. Hierbei sind die Ventile 53 und 52 geöffnet und die Ventile 30, 54 und 56 geschlossen.

Durch entsprechendes Öffnen der Ventile 54 und 56 und Schließen der Ventile 52 und 53 läßt sich nach Reinigung des Behälters 5 in entsprechender Weise der Behälter 4 sowie die Leitungen 7 und 9 reinigen.

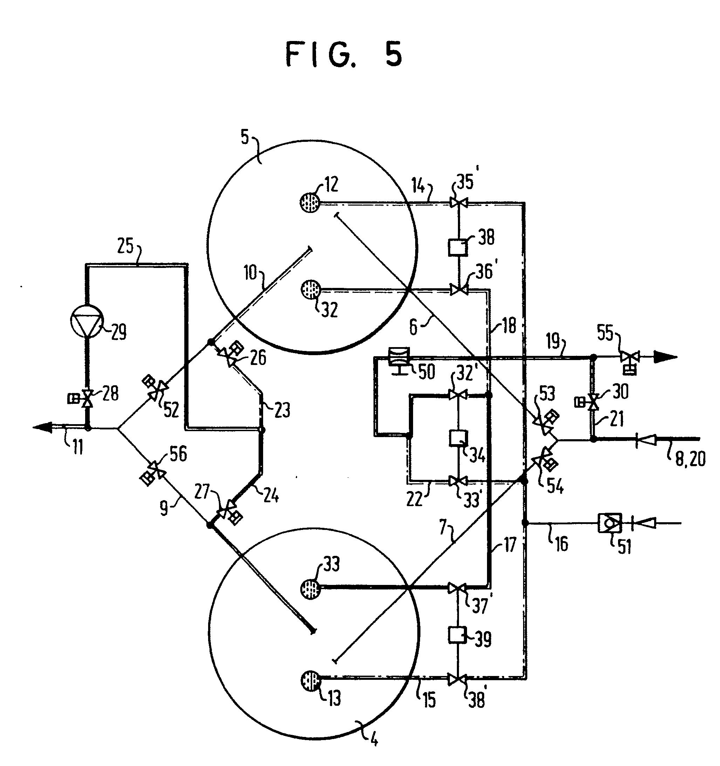

Figur 5 stellt eine weitere Möglichkeit der CIP-Reinigung dar : wie ersichtlich, ist hierbei das Ventil 30 geöffnet, wohingegen die Ventile 53 und 54 geschlossen sind. Entsprechend strömt das Reinigungsmedium über die Reinigungshauptleitung 20 sowie die Leitungen 21, 19 und 31 bei geöffnetem Kugelhahn 32' sowie die Leitung 17 in die Reinigungskugel 33 des Behälters 4. Gleichzeitig oder im Wechsel kann das Reinigungsmedium über die Leitung 18 bei geöffnetem Kugelhahn 36' in die Reinigungskugel 32 des Behälters 5 gelangen.

Werden die Kugelhähne 33' sowie 35' und 38' geöffnet, so kann das Reinigungsmedium über die Leitungen 22 und 14 bzw. 15 in die Reinigungskugeln 12 und 13 der Behälter 4 und 5 strömen. Da die entsprechenden Kugelhähne 35' und 36' sowie 32' und 33' und 37' und 38' jeweils paarweise mit einer entsprechenden Betätigungsvorrichtung 34, 38 und 39 verbunden sind, kann der ·entsprechende Reinigungsvorgang vorteilhafterweise parallel oder im Wechsel erfolgen.

Das in dem Behälter 4 angesammelte Reinigungsmedium kann bei geöffnetem Ventil 27 über die Leitung 24 und 25 zur Produktauslaufhauptleitung 11 strömen. Bei geöffnetem Ventil 26 besteht parallel die Möglichkeit, daß das im Behälter 5 angesammelte Reinigungsmedium über die Leitungen 10, 23 und 25 ebenfalls zur Produktauslaufhauptleitung 11 strömt. Hierbei sind die Ventile 52 und 56 der Leitungen 9 und 10 geschlossen, wohingegen das Ventil 28 in der Leitung 25 geöffnet ist. Der Strömungsverlauf des Reinigungsmediums ist in dem Verrohrungsschema nach Fig. 5 in ausgezogenen bzw. in gestrichelten bzw. in strichpunktierten Linien dargestellt.

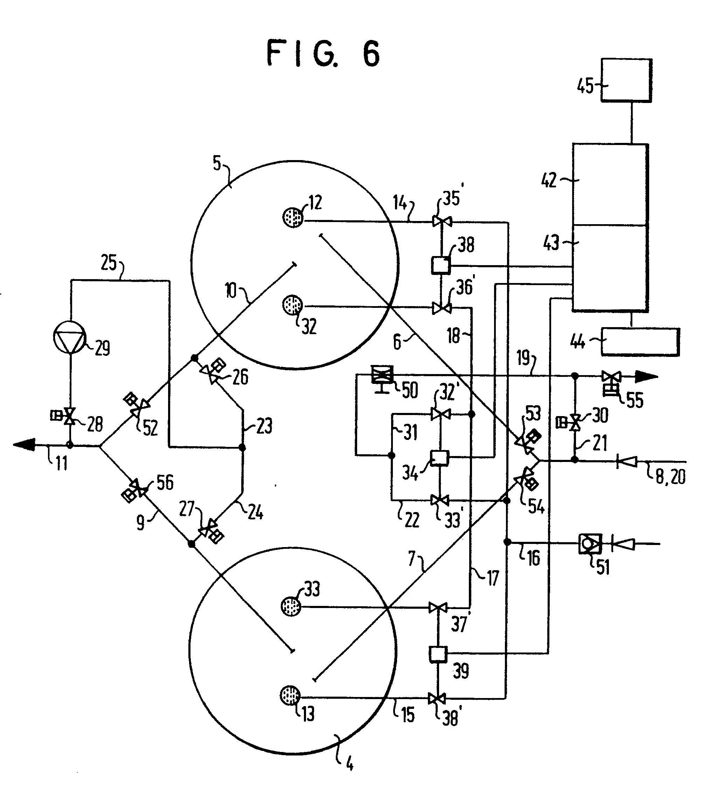

Nach Figur 6 besteht die Möglichkeit, die einzelnen Betätigungsvorrichtungen 34, 38 und 39 jeweils über entsprechende, nicht näher bezeichnete Leitungen mit einer pneumatischen Betätigungsvorrichtung 43 zu verbinden, welche ihrerseits durch eine elektronische Steuereinheit 42 gesteuert wird. Es besteht hierbei die Möglichkeit, daß diese elektronische Steuereinheit 42 mit einer Fernbedienungsvorrichtung 45 verbunden ist. Gleichzeitig kann ein Regler 44 mit den vorgenannten Einheiten zusammenwirken. Damit ist vorteilhafterweise eine Fernregulierung der Förderleistung möglich. Die elektronische Steuereinheit 42 ist frei programmierbar, wobei vorteilhafterweise jedoch immer ein Programm für die Bruchförderung entsprechend Fig. 3 sowie ein Programm für verschiedene Reinigungszyklen gemäß Fig. 4 und 5 vorgesehen sein können.

Durch die Erfindung lassen sich vorteilhafterweise die beiden Pumpbehälter 4 und 5 sowie die entsprechenden Rohrleitungen als System komplett im CIP-Verfahren reinigen, so daß die Käsebruch-Förderanlage insgesamt eine höhere Effektivität besitzt. Das Reinigungsmedium kann hierbei über die Rückführleitung 41 wieder in den Kreislauf zurückgeführt werden, so daß darüber hinaus die gesamte Anlage rationell arbeitet.

**Ansprüche**

1. Käsebruch-Förderanlage, mit einer zwischen einer Bearbeitungsstation (1) und einer Portionierstation (2) angeordneten Bruchpumpe (3), wobei die Bruchpumpe (3) als Doppelpumpenbehälter ausgebildet ist, mit zwei den Käsebruch aufnehmenden Behältern (4, 5), welche jeweils über eine erste Leitung (6, 7) mit einer gemeinsamen Produkteinlaufhauptleitung (8) und jeweils über eine zweite Leitung (9, 10) mit einer gemeinsamen Produktauslaufhauptleitung (11) verbunden sind, wobei jeder der Behälter (4, 5) eine Reinigungskugel (12, 13) aufweist und beide Reinigungskugeln (12, 13) über Zuluftleitungen (14, 15) und eine gemeinsame Zulufthauptleitung (16) mit einer Zuluftquelle in Verbindung stehen und in das Innere jedes Behälters (4, 5) eine mit einer gemeinsamen Hauptabluftleitung (19) verbundene Abluftleitung (17, 18) führt und eine Reinigungshauptleitung (20) über eine Nebenleitung (21) mit den Abluftleitungen (17, 18, 19) und eine weitere Nebenleitung (22) mit den Zuluftleitungen (14, 15, 16) verbunden sind und die einzelnen Leitungen über Ventile zu öffnen und zu schließen sind, dadurch gekennzeichnet, daß die Produkteinlaufhauptleitung (8) gleichzeitig als Reinigungshauptleitung (20) ausgebildet und über die durch ein Ventil (30) verschließbare Nebenleitung (21) mit der Ablufthauptleitung (19) verbunden ist, daß sich die Ablufthauptleitung (19) gabelt in die Nebenleitung (22), welche mit den zu den Reinigungskugeln (12, 13) führenden Leitungen (14,15) verbunden ist und in eine Neben leitung (31), welche zu den mit jeweils einer weiteren Reinigungskugel (32, 33) in den Behältern (4, 5) verbundenen Abluftleitungen (17, 18) führt und daß die beiden, mit der gemeinsamen Produktauslaufhauptleitung (11) verbundenen Leitungen (9, 10) jeweils über eine Nebenleitung (23, 24) und eine gemeinsame Leitung (25) mit der gemeinsamen Produktauslaufhauptleitung (11) in Verbindung stehen, wobei in den Nebenleitungen (23, 24) Ventile (26, 27) und in der gemeinsamen Leitung (25) ein Ventil (28) und eine Kreiselpumpe (29) angeordnet sind.

2. Käsebruch-Förderanlage nach Anspruch 1, dadurch gekennzeichnet, daß die beiden Nebenleitungen (22, 31) jeweils durch einen Kugelhahn (32', 33') zu öffnen und zu schließen sind.

3. Käsebruch-Förderanlage nach Anspruch 2, dadurch gekennzeichnet, daß die beiden Kugelhähne (32', 33') mit einer gemeinsamen Betätigungsvorrichtung (34) verbunden sind.

4. Käsebruch-Förderanlage nach einem der vorhergehenden Ansprüche, dadurch gekennzeichnet, daß die zu den beiden Reinigungskugeln (12, 32 ; 13, 33) in jedem Behälter (4, 5) führenden Leitungen (14, 18 ; 15, 17) jeweils durch einen Kugelhahn (35', 36' ; 37', 38') zu öffnen und zu schließen sind.

5. Käsebruch-Förderanlage nach Anspruch 4, dadurch gekennzeichnet, daß jeweils zwei benachbarte Kugelhähne (35', 36' ; 37', 38') mit einer gemeinsamen Betätigungsvorrichtung (38, 39) verbunden sind.

6. Käsebruch-Förderanlage nach einem der vorhergehenden Ansprüche, gekennzeichnet durch eine elektronische Steuereinheit (42) für die einzelnen Kugelhähne.

7. Käsebruch-Förderanlage nach Anspruch 6, dadurch gekennzeichnet, daß die Steuereinheit (42) über eine pneumatische Betätigungsvorrichtung (43) mit den einzelnen Betätigungsvorrichtungen (34, 38, 39) für die Kugelhähne verbunden ist.

8. Käsebruch-Förderanlage nach Anspruch 6 und 7, dadurch gekennzeichnet, daß die Steuereinheit (42) mit einem Regler (44) und einer Fernbedienungsvorrichtung (45) verbunden ist.

## Claims

1. A cheese-segment conveyor, comprising a segmenting pump (3) arranged between a processing station (1) and a portioning station (2), wherein the segmenting pump (3) is a double vessel pump having two vessels (4, 5) which receive cheese segments and which are each connected via a first pipe (6, 7) to a common main product-input pipe (8) and via a second pipe (9, 10) to a common main product-output pipe (11), wherein each vessel (4, 5) contains a cleaning ball (12, 13) and both cleaning balls (12, 13) are connected, via air-intake pipes (14, 15) and a common main air-intake pipe (16), to an air-intake source, and leading from the inside of each vessel (4, 5) is a waste-air pipe (17, 18) which is connected to a common main waste-air pipe (19) a main cleaning pipe (20) being connected via a secondary pipe (21) to the waste-air pipes (17, 18, 19), and a further secondary pipe (22) being connected to the air-intake pipes (14, 15, 16) and wherein the individual pipes can be opened and shut by means of valves, **characterised in that** the main product-input pipe (8) is also arranged to serve as the main cleaning pipe (20) from which the secondary pipe (21), which can be closed by a valve (30), is connected to the main waste-air pipe (19), in that the main waste-air pipe (19) branches into a secondary pipe (22), which is connected to the pipes (14, 15) leading to the cleaning balls (12, 13), and into a secondary pipe (31), which leads to the waste-air pipes (17, 18) which are in turn connected to further cleaning balls (32, 33) in the vessels (4, 5) and in that each of the two pipes (9, 10), which is connected to the common product-outlet main pipe (11), is connected via a secondary pipe (23, 24) and a common pipe (25) to the common product-outlet main pipe (11), in which respect valves (26, 27) are arranged in the secondary pipes (23, 24), and a valve (28) and a centrifugal pump (29) are arranged in the common pipe (25).

2. A cheese-segment conveyor according to claim 1, **characterised in that** each of the two secondary pipes (22, 31) can be opened and shut by means of a ball cock (32', 33').

3. A cheese-segment conveyor according to claim 2, **characterised in that** the two ball cocks (32', 33') are connected to a common operating means (34).

4. A cheese-segment conveyor according to one of the above claims, **characterised in that** each of the pipes (14, 18 ; 15, 17) leading to the two cleaning balls (12, 32 ; 13, 33) in each vessel (4, 5) can be opened and shut by means of a ball cock (35', 36' ; 37', 38').

5. A cheese-segment conveyor according to claim 4, **characterised in that** in each case two adjacent ball cocks (35', 36' ; 37', 38') are connected to a common operating means (38, 39).

6. A cheese-segment conveyor according to one of the above claims, **characterised by** an electronic control unit (42) for the individual ball cocks.

7. A cheese-segment conveyor according to claim 6, **characterised in that** the control unit (42) is connected via a pneumatic operating means (43) to the individual operating means (34, 38, 39) of the ball cocks.

8. A cheese-segment conveyor according to claims 6 and 7, **characterised in that** the control unit (42) is connected to a regulator (44) and a remote-control means (45).

## Revendications

1. Installation de transport de caillé, avec une pompe de caillé (3) disposée entre un poste de traitement (1) et un poste de portionnement (2), la pompe de caillé (3) étant réalisée sous la forme d'un double récipient de pompage, avec deux récipients (4, 5) qui reçoivent le caillé et qui sont reliés à une conduite principale commune d'entrée de produit (8) par l'intermédiaire d'une première conduite respective (6, 7), et à une conduite principale commune de sortie de produit (11) par l'intermédiaire d'une deuxième conduite respective (9, 10), chacun des récipients (4, 5) présentant une boule de nettoyage (12, 13), et les deux boules de nettoyage (12, 13) étant reliées à une source d'air d'admission par l'intermédiaire de conduites d'air d'admission (14, 15) et d'une conduite principale commune d'air d'admission (16), une conduite d'air d'échappement (17, 18), reliée à une conduite principale commune d'air d'échappement (19), menant à l'intérieur de chaque récipient (4, 5), et une conduite principale de nettoyage (20) étant reliée aux conduites d'air d'échappement (17, 18, 19) par l'intermédiaire d'une conduite secondaire (21), et une autre conduite secondaire (22) étant reliée aux conduites d'air d'admission (14, 15, 16), et les différentes conduites pouvant être ouvertes et fermées par des distributeurs,
caractérisée en ce que la conduite principale d'entrée de produit (8) sert simultanément de conduite principale de nettoyage (20), et elle est reliée à la conduite principale d'air d'échappement (19) par l'intermédiaire de la conduite secondaire (21), qui peut être fermée par un distributeur (30),
en ce que la conduite principale d'air d'échappement (19) se ramifie en la conduite secondaire (22), reliée aux conduites (14, 15) menant aux boules de nettoyage (12, 13), et en une conduite secondaire (31), qui mène aux conduites d'air d'échappement (17, 18) qui sont respectivement reliées à une boule de nettoyage supplémentaire (32, 33) dans les récipients (4, 5),

et en ce que les deux conduites (9, 10), qui sont reliées à la conduite principale commune de sortie de produit (11), sont respectivement reliées à cette conduite (11) par l'intermédiaire d'une conduite secondaire (23, 24) et d'une conduite commune (25), des distributeurs (26, 27) étant disposés dans les conduites secondaires (23, 24), et un distributeur (28) et une pompe centrifuge (29) étant disposés dans la conduite commune (25).

2. Installation de transport de caillé selon la revendication 1, caractérisée en ce que les deux conduites secondaires (22, 31) peuvent être ouvertes et fermées par un robinet à boisseau sphérique respectif (32', 33').

3. Installation de transport de caillé selon la revendication 2, caractérisée en ce que les deux robinets à boisseaux sphériques (32', 33') sont reliés à un dispositif d'actionnement commun (34).

4. Installation de transport de caillé selon l'une des revendications précédentes, caractérisée en ce que les conduites (14, 18 ; 15, 17), qui mènent aux deux boules de nettoyage (12, 32 ; 13, 33) dans chaque récipient (4, 5), peuvent être ouvertes et fermées par un robinet à boisseau sphérique respectif (35', 36' ; 37', 38').

5. Installation de transport de caillé selon la revendication 4, caractérisée en ce que deux robinets à boisseaux sphériques voisins (35', 36' ; 37', 38') sont chacun reliés à un dispositif d'actionnement commun (38, 39).

6. Installation de transport de caillé selon l'une des revendications précédentes, caractérisée par une unité de commande électronique (42) pour les différents robinets à boisseaux sphériques.

7. Installation de transport de caillé selon la revendication 6, caractérisée en ce que l'unité de commande (42) est reliée par l'intermédiaire d'un dispositif d'actionnement pneumatique (43) aux différents dispositifs d'actionnement (34, 38, 39) pour les robinets à boisseaux sphériques.

8. Installation de transport de caillé selon les revendications 6 et 7, caractérisée en ce que l'unité de commande (42) est reliée à un régulateur (44) et à un dispositif de commande à distance (45).

# FIG. 1

# FIG. 2

# FIG. 3

# FIG. 4

# FIG. 5

# FIG. 6